# EUROPEAN PATENT APPLICATION

(11) **EP 2 098 325 A1**
(43) Date of publication of application: **09.09.2009**
(21) Application number: 09153328.1
(22) Date of filing: 20.02.2009
(51) Int. Cl.: B23K 20/12

(54) **Friction welding methods and friction welding apparatuses**

(30) Priority: 05.03.2008 JP 2008054581; 16.01.2009 JP 2009007790
(71) Applicant: Kabushiki Kaisha Toyota Jidoshokki, Kariya-shi, Aichi 448-8671 (JP); Izumi Machine Mfg. Co., Ltd., Ohbu-shi, Aichi (JP)
(72) Inventor: Kawaura, Koichi, Kariya-shi Aichi 448-8671 (JP); Matsubayashi, Tetsuya, Kitasaki-cho Ohbu-shi Aichi (JP); Mizutani, Akira, Kitasaki-cho Ohbu-shi Aichi (JP)
(74) Representative: TBK-Patent

(57) **Abstract**

One aspect of the present invention can include a friction welding method having a friction step for generating a friction heat by pressing the pair of works (W1,W2) while relatively rotating the pair of works (W1,W2), and an upset step started before generating an approach margin at the pair of works (W1,W2) at the friction step, restricting rotation of the pair of works (W1,W2) relative to each other and applying an upset pressure between the pair of works (W1,W2).

## Description

This application claims priority to Japanese patent application serial number 2008-54581 and 2009-7790, the contents of which are incorporated herein by reference.

The present invention relates to a friction welding method and a friction welding apparatus for friction-welding a pair of works by pressing the pair of works while rotating the pair of works relative to each other.

In a background art, various friction welding methods are known, for example, an LHI method (reference to Japanese Laid-Open Patent Publication No.2003-62676), a method suitable for an aluminum alloy (reference to Japanese Laid-Open Patent Publication No.H05-96385) and the like are known. According to the LHI method, friction heat is generated by abutting a pair of works while rotating the pair of works relative to each other. Further, a relative rotation is continued until a friction torque of the bonding face or surface between the works becomes a steady value from an initial maximum value (friction step). Further, the relative rotation between the works is restricted (braked) in a state in which the friction torque reaches the steady value, and an upset pressure is applied between the works (upset step).

Therefore, according to the LHI method, the brake is applied at an initial stage of friction welding (that is, a second phase in four phases of friction torque). Therefore, an approach margin between the pair of works in friction welding becomes smaller than that by a method of braking at a later stage (fourth phase) of a normal brake type friction welding, as a result, generation of burr is reduced. The term "approach margin" as used herein can be interchangeable with other similar terms used in the art such as "friction upset distance" and "burn off length". All of the terms signify a shortened or wasted length of the works during thrust is applied between the works for the friction welding. Or all of them signify a physical relationship between the two works that has the possibility to create the problem known in the art as burr or burring.

According to a friction welding method of other background art, a pair of work members comprising an aluminum alloy are brought into contact with each other by rotating the pair of work members relative to each other and brake is applied within 0.7 second after the contact. Therefore, the friction welding can be finished before the work of aluminum alloy is significantly deformed by the friction heat. However, the above-described method is a method corresponding to only aluminum alloy and is not a method capable of corresponding to general friction welding.

Further, the LHI method of the background art and the method described in Japanese Laid-Open Patent Publication No.H05-96385 are methods of generating an approach margin between the pair of works by pressing the pair of works while rotating the pair of works relative to each other and applying brake to the relative rotation between the works after generating the approach margin.

Hence, there is a need in the art for a friction welding method and a friction welding apparatus having a smaller generation of burr than that of the background art and applicable to a wide range of materials.

One aspect of the present invention can include a friction welding method having a friction step for generating a friction heat by pressing a pair of works while relatively rotating the pair of works, and an upset step started before generating an approach margin at the pair of works at the friction step, restricting rotation of the pair of works relative to each other and applying an upset pressure between the pair of works.

In contrast to prior systems or methods, according to this invention, the relative rotation between the works is restricted before generating the approach margin. Therefore, the approach margin is not generated in the friction step before restricting the relative rotation, and the approach margin can be generated only in the upset step. Therefore, the approach margin in the total of the friction welding is reduced, and the burr which can be formed thereby is reduced.

Additional objects, features, and advantages, of the present invention will be readily understood after reading the following detailed description together with the claims and the accompanying drawings, in which:
- FIG. 1: is a front view of a friction welding apparatus;
- FIG. 2: is a left side view of the friction welding apparatus; and
- FIG. 3: is a diagram for showing control values and status values.

Each of the additional features and teachings disclosed above and below may be utilized separately or in conjunction with other features and teachings to provide improved friction welding methods and friction welding apparatuses. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful configurations of the present teachings.

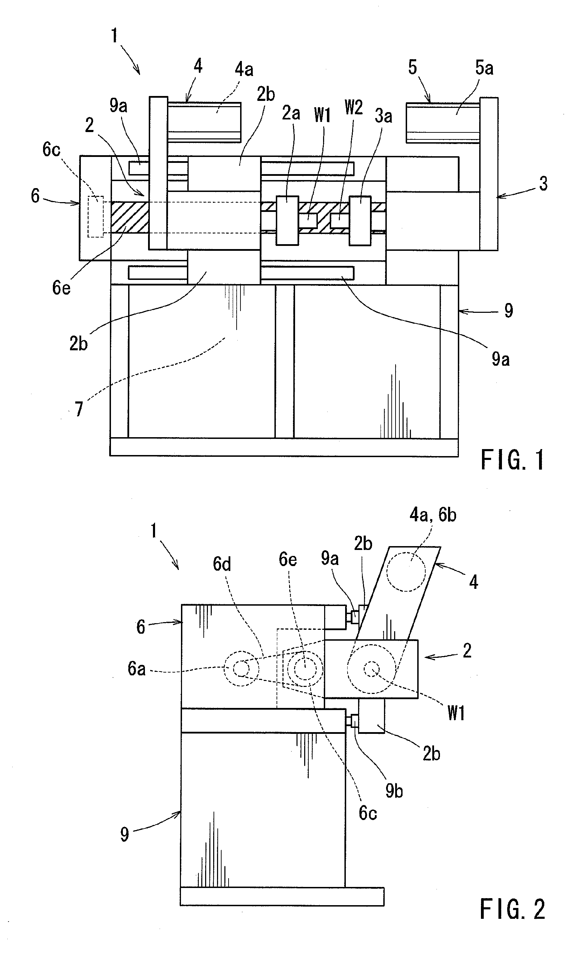

As shown in Fig. 1, a friction welding apparatus 1 includes a bed 9, a first holding base 2 movably attached to the bed 9, a second holding base 3 unmovably attached to one end portion of the bed 9, and a motor holding base 6 unmovably attached to other end portion of the base 9.

As shown in Figs. 1 and 2, the first holding base 2 includes guide portions 2b slidably mounted to rails 9a formed at upper and lower portions of the bed 9. One end portion of the first holding base 2 is provided with a chuck 2a. The chuck 2a is connected W1. The other end portion of the first holding base 2 includes a spindle motor member 4 having a spindle motor (rotating apparatus) 4a. The spindle motor 4a can be a servo motor or the like and can be controlled by controlling means or device 7 provided at the bed 9. Controlling device 7 can be a CPU or individual circuits within a CPU. A power transmission mechanism (not shown) is provided between the spindle motor member 4 and the second holding base 3. The transmission mechanism transmits a power from the spindle motor 4a to the chuck 2a and axially rotates the first work W1 along with the chuck 2a.

As shown in Figs. 1 and 2, a thrust mechanism for sliding the first holding base 2 is provided between the first holding base 2 and a motor holding base 6. The thrust mechanim includes a thrust motor 6a and a ball screw 6e provided at the motor holding base 6. The thrust motor 6a can be a servo motor or the like and can be controlled by the controlling means 7. The ball screw 6e is connected with a pulley 6c at a left end in Fig. 1. Further, a timing belt 6d for transmitting power between an output shaft of the thrust motor 6a and the pulley 6c is hung therebetween. Further, the ball screw 6e is screwed relative to a female screw provided at the first holding base 2. Further, the ball screw 6e slides the first holding base 2 relative to the bed 9 by being driven to rotate by the thrust motor 6a. Further, there is provided a contact detecting sensor 6b for detecting when the first and a second work (W1, W2) are brought into contact with each other. For example, a torque sensor of the spindle motor 4a is used as the contact detecting sensor 6b, and the contact of the works W1 and W2 is detected by detecting a variation in a press-contact torque.

As shown in Fig. 1, the second holding base 3 includes a chuck 3a for holding the second work W2 at one end portion thereof. The chuck 3a is rotatably supported by a main body of the second holding base 3. Other end portion of the second holding base 3 is provided with a motor member 5 having a motor 5a. The motor 5a can be a servo motor or the like and can be controlled by the controlling means 7. A power transmission mechanism for controlling the second work W2 along with the chuck 3a relative to a main body of the second holding base 3 by transmitting power from the motor 5a to the chuck 3a is provided between the motor member 5 and the first holding base 2. Further, by controlling the motor 5a, the second work W2 can be brought into a position holding state unrotatable relative to the main body of the second holding base 3, a rotatable free state, or a forced rotating state, thereby being forcedly rotated.

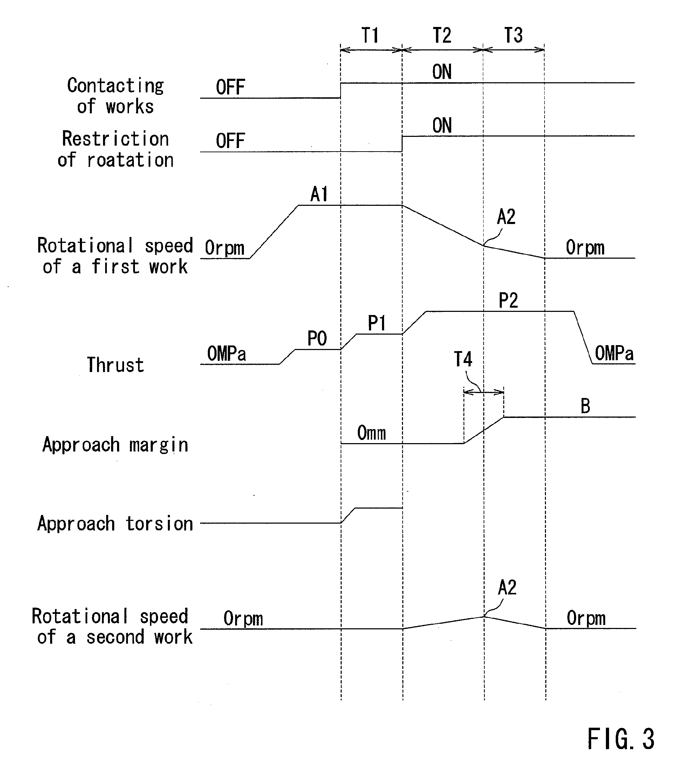

The process of friction welding the first and the second works W1 and W2 by the friction welding apparatus 1 will now be described. First, the first and the second works W1 and W2 are respectively mounted to the chucks 2a and 3a. Next, the second work W2 is brought into an unrotatable position holding state (fixed) by controlling the motor 5a, the motor 5a is controlled by the controlling means 7. Next, the first work W1 is rotated at a relatively fast speed, a friction-welding rotational speed A1, via the spindle motor 4a (refer to Fig. 3). For example, when the works W1 and W2 are round bars of steel material, the friction-welding rotational speed A1 is set at 3300 rpm to 10000 rpm or 1500 rpm to 10000 rpm. When a rotation speed is excessively low, fouling or seizure is brought about at outer peripheral portions of the works W1 and W2, immediately thereafter, a torsional breakage is brought about by relative rotation between the works W1 and W2, and there is a concern of rapidly increasing a heat generating amount by the torsional breakage and thus generating burrs. Further, as the steel material, mild steel (for example, S15C or the like), high carbon steel (for example, S55C or the like) can be utilized. As the round bar, a solid round bar can be φ3 to 30, preferably a solid round bar of φ3 to 20, or a hollow round bar (or the like) having a sectional area size corresponding to a sectional area size of the solid round bar can be utilized.

Next, by driving the thrust motor 6a by the controlling means 7, the first holding base 2 is moved to the second holding base 3. A thrust P0 at this occasion is set to a magnitude capable of moving the first holding base 2 at a low speed, for example, such that a pressure value when bringing the works W1 and W2 into contact with each other becomes 1 through 3 PMa. When the works W1 and W2 are brought into contact with each other, friction heat is generated between the works W1 and W2. Further, the pressure between the works W1 and W2 by the thrust mechanism becomes P1 (low pressure). Further, the pressure is held at P1. P1 is set at 5 to 10 MPa, or 5 to 40 MPa when the pressure is low to a degree of not immediately generating an approach margin at the works W1 and W2, and the works W1 and W2 are round bars of a steel material. When P1 is excessively low, the friction heat in the friction step becomes deficient. Further, the friction step is finished before generating the approach margin. If P1 was excessively high, the approach margin would be immediately generated, and many burrs generated. Therefore, an upper limit of P1 is determined by a material, a shape or the like.

When a friction step is started, as shown in Fig. 3, a friction welding torque is generated between the works W1 and W2, and friction heat is generated at the contact faces. At this occasion, the works W1 and W2 are expanded and elongated by friction heat, and the first holding base 2 is moved in a direction returning to an original position. Although the first holding base 2 is basically held at a contacting position where the works W1 and W2 start contacting with each other, the first holding base 2 may be moved back by a force. If the press force was large as in the background art, or the press force was further exerted between the works W1 and W2, the contact face was softened by the friction heat, and the approach margin (friction margin) might be generated by moving the works W1 and W2 in directions towards each other. Meanwhile in this embodiment, the works are maintained at the low press force P1 as described above, the high friction-welding rotational speed A1 as described above, and therefore, the bonding face can be heated so as not to generate the approach margin in the friction step. Further, when the friction step is finished, rotation of the work W1 is restricted. That is, rotation of the work W1 is restricted in the midst of the first phase of friction welding of the background art. Therefore, rotation is restricted before generating the maximum friction torque (initial torque).

As a timing for restricting the rotation, a timer is operated by the controlling means 7 based on a detecting signal from the contact detecting sensor 6b. After operating the timer, the timing is set to time T1. Further, the controlling means 7 decelerates the rotational speed of the first work W1 by operating brake at a time after the elapse of time T1. Further, according to the embodiment, in comparison with the method of the background art, the friction-welding rotational speed A1 is set to be fast and the pressure P1 is set to be low. Therefore, the approach margin is difficult to be generated in the friction step, and therefore a value for T1 can be widely selected. For example, when the works W1 and W2 are round bars of steel material, T1 can be set at 0.05 to 1 second, or 0.05 to 2 seconds. Further, it is preferable to set the friction-welding rotational speed A1 at a sufficiently high speed to a degree of not generating fouling or seizure at the outer peripheral portions of the works W1 and W2.

Further, after the elapse of time T1 the controlling means 7 sends a signal to thrust motor 6a to generate the upset pressure P2 between the works W1 and W2, during which there is restriction of the rotation. It is preferable that the upset pressure P2 is equal to or larger than the pressure P1 at the friction step, for example, 1.5 times as much as the pressure P1 or larger, or 2 to 4 times as much as the pressure P1 or larger. When the works W1 and W2 are round bars of steel material, it is preferable to set P2 at 10 to 30 MPa, or 10 to 40 MPa.

Further, after the elapse of time T1 the controlling means 7 sends a signal to motor 5a to allow the second work W2 to be in an axially rotatable free state. Thereby, the second work W2 starts rotating in the same direction as the first work W1 (by friction), and thus work W2 rotates at the same rotational speed A2 of the first work W1 after the elapse of time T1 + T2, and the works are stopped after an elapse of time T1 + T2 + T3 (upset step). For example, in the case of the works W1 and W2 of the round bars of a steel material, both T2 and T3 are set at 0.5 to 1 second.

As shown in Fig. 3, the approach margin is generated during a time T4 before and after the relative rotation of the first and the second works W1 and W2 becomes null. For example, when the works W1 and W2 are round bars of steel material, the approach margin B at 0.05 to 0.2 mm, or 0.1 to 1 mm is generated during a time period of time T4 of about 0.05 second. Although the approach margin B can be generated during time T4, this time period is short, therefore the possibility of burr generation is reduced or eliminated as compared the methods described in the background.

As described above, the friction welding method includes the friction step and the upset step. At the upset step, the relative rotation of the pair of works W1 and W2 is restricted, and the upset pressure P2 is applied between the pair of works W1 and W2. Therefore, the approach margin is not generated at the friction step before restricting the relative rotation, and the approach margin is only generated at the upset step. Therefore, generating the approach margin during the total friction welding process becomes small, and the possible formation of burrs becomes small.

Further, according to the friction welding method, at the upset step, brake is applied to a side of the rotated first work W1, and the side of the fixed second work W2 is brought into a rotatable free state. Therefore, as the first work W1 starts decelerating, the second work W2 starts rotating along with the first work W1, and thereafter, the relative rotation between the works W1 and W2 becomes null. Therefore, the relative rotation between the works W1 and W2 becomes null in a short period of time. With this configuration, the torsion generated between the pair of works W1 and W2 is reduced, and the possibility of burr generation by torsion becomes small. Further, since the burr becomes small, post working (cutting out the burr) is eliminated or reduced. Further, since the approach margin is small, the material is saved and an accuracy of a total length is also promoted. Further, according to this friction welding method, the torsion is smaller than that in the background art method, and therefore, also the promotion of the accuracy of coaxiality can be expected.

Further, when the pair of works W1 and W2 are made of steel material, the relative rotational speed of the pair of works W1 and W2 at the friction step is set at 3300 to 10000 rpm or 1500 rpm to 10000 rpm. Further, the pressure P1 of pressing the pair of works W1 and W2 at the friction step is set at 5 to 10 MPa, or 5 to 40 MPa. Therefore, the pair of works W1 and W2 are relatively rotated at the high speed and pressed by a weak force in comparison with the background art. Therefore, the friction heat can firmly be generated between the works W1 and W2 comprising steel material without generating the approach margin. As a result, the pair of works W1 and W2 comprising steel material can firmly be bonded.

Further, at the upset step, the upset pressure P2 is set at 10 to 30 MPa, or 10 to 40 MPa. Therefore, after pressing the pair of works W1 and W2 by a weak force at the friction step, the pair of works W1 and W2 are pressed by a strong force at the upset step. Therefore, the works W1 and W2 comprising steel material can firmly be bonded.

Further, the friction welding apparatus 1 includes the rotating apparatus (spindle motor 4a), the thrust mechanism, the contact detecting sensor 6b, and the controlling means 7 for restricting the relative rotation of the first and the second works W1 and W2 after the elapse of the set time T1 after the works W1 and W2 are brought into contact with each other based on the detecting signal from the contact detecting sensor 6b and controlling the upset pressure P2 between the first and the second works W1 and W2 by the thrust mechanism. Further, the time is set to time T1 before generating the approach margin between the first and second works W1 and W2. Therefore, the approach margin during the total of the friction welding process becomes small, and the possibility of generating burrs becomes small.

Next, a quality control step for determining an acceptability of friction welding (or an acceptable bonding standard) will be explained. One example of a failure of bonding an interface between the works W1 and W2 breaks when the works W1 and W2 are subjected to a tensile test. Further, one example of an acceptable bonding standard during a tensile test would be if a portion of either work, other than the interface, breaks first. In accordance with this quality control step, the acceptable bonding standard can also be determined by the size of the approach margin without carrying out the tensile test.

Meanwhile, in the background art, the approach margin can accurately be measured by measuring lengths of the works W1 and W2 before and after friction welding after sufficiently cooling the works W1 and W2. However, in this case, it is necessary to control cooling time or the like, and this can complicate operation thereof. Further, according to this embodiments method of friction welding, the approach margin is very small, and therefore, the approach margin is not easily measured. Hence, according to this embodiment, the approach margin is measured by the following method easily and accurately and the acceptable bonding standard can be determined from a size of the approach margin.

First, the first and the second works W1 and W2 are mounted to the chucks 2a and 3a. Further, the first work W1 is rotated at the friction-welding rotational speed A1, and the first holding base 2 is moved to the second holding base 3. At this occasion, the position and the time of the first holding base 2 are measured by the position detecting member for detecting the position of the first holding base 2 and the timer, and the measured data are continuously stored by a storage member (such as a disk drive, flash memory, or the like).

Successively, a friction step is carried out by pressing the works W1 and W2, after the elapse of the time of T 1, a side of the first work W1 is restricted in rotation. At the same time, a side of the second work W2 is brought into the free state (refer to Fig. 3). At this occasion, the sensor of detecting the rotational speed of the second work W2 measures the rotational speed of the work W2, and the measured data is continuously stored by the storage means. The second work W2 is accelerated during the time T2, starts decelerating after the rotational speed becomes the same rotational speed (A2) as the first work W1, and is stopped after the elapse of time T2 + T3.

Next, the controlling means 7 specifies a fixedly bonding time. The fixedly bonding time is a time point at which the work W2 is decelerated from being accelerated. The fixedly bonding time is calculated from data of the rotational speed and the time of the work W2 stored in the storage member by the controlling means 7. Further, the controlling means 7 calculates an amount of moving the holding base 2 at the time T4 (before and after the fixedly bonding time) from data of the position and time of the holding base 2 (stored in the storage member), and the moving amount can be used to determine the approach margin. Further, as shown in Fig. 3, the approach margin is generated before and after the fixedly bonding time, and the approach margin is the true value to determine bonding of works W1 and W2. Further, T4 is determined by the material and the size of the works W1 and W2, and the controlling means 7 calculates the approach margin based on T4 previously stored to the storage means.

Next, the controlling means 7 determines whether the calculated approach margin falls in a range of a predetermined value. For example, it is determined whether the approach margin falls in a range of 0.1 to 1 mm, or 0.05 to 1 mm. When the approach margin is larger than a minimum predetermined value (e.g. 0.1 or 0.05mm), it is determined that the works W1 and W2 are sufficiently bonded, when the approach margin is smaller than a maximum predetermined value (e.g. 1mm), it is determined that the burr becomes sufficiently small in friction welding. Thereby, the controlling means 7 determines the acceptability of friction welding.

As described above, it is determined (by the controlling means 7) that the approach margin before and after fixedly bonding time of fixedly attaching or bonded the pair of works W1 and W2 (for example T4) is larger than a predetermined value, thereby, an acceptable bonding standard for the works W1 and W2 is determined (quality control step). Meanwhile, in a background art, there is known a method of controlling the approach margin in order to sufficiently carry out bonding between the works (refer to Japanese Laid-Open Patent Publication No.H03-268884). The approach margin at this occasion is controlled by an amount of moving the work, the work is thermally expanded by heat generation, and therefore, a control is carried out by adding a correction amount thereby. On the other hand, according to the friction welding method of this embodiment, the approach margin is very small, and therefore, it is not easy to measure the approach margin. However, although the approach margin can be provided by measuring the amount of moving the work W1 in friction welding, the works W1 and W2 are elastically deformed by the press force in friction welding, further, thermally expanded by the friction heat. Therefore, it is not easy to measure the approach margin.

In contrast thereto, the inventors have found that in the case of the friction welding method according to this embodiment, the true approach margin necessary for bonding the works W1 and W2 is produced within a short time T4 before and after the fixedly bonding time of the works W1 and W2. Further, according to the embodiment, the approach margin is measured at time T4 before and after the fixedly bonding time. Therefore, the approach margin can be measured in a relatively short time, thereby, the influence of the elastic deformation and thermally expansion of the works W1 and W2 brought about in the friction welding becomes inconsiderable, and the approach margin can accurately be measured. In this way, the acceptability of friction welding between the works W1 and W2 can accurately be determined. Further, the determination of bonding the works W1 and W2 can be determined without cooling the works W1 and W2 or carrying out a rupture test, and therefore, the acceptability of bonding the works W1 and W2 can swiftly and simply be determined.

Further, at the upset step, the rotation of work W1 is restricted, and work W2 is brought into the rotatable free state. Further, the controlling means 7 specifies the time point at which the work W2 is decelerated from being accelerated as the fixedly bonding time (based on a detecting signal from the sensor of measuring the rotational speed of the work W2 in the free state). Therefore, the fixedly bonding time can be specified by a change in the speed of the work W2 on the free state side. Therefore, the fixedly bonding time can simply and firmly be provided. Further, it can be predicted from a result of an experiment that the fixedly bonding time is the time specified above.

Examples of the invention will be explained by using tables as follows. Test pieces are formed by carrying out friction welding under a condition shown in a test condition of Table 1. Further, a diameter of a portion of bonding the first work W1 and the second work W2 stays the same, and all the materials are a solid cylinder of S 15C. Further, "LHI" indicates LHI method, "Brake" indicates normal brake type friction welding method.

**(Table 1)**

| No. | Work's Diameter (mm) | Pressure at a friction step P1 (MPa) | Upset Pressure P2 (MPa) | Friction-welding Rotational speed A1 (rpm) | Friction step time T1 (sec.) |
|---|---|---|---|---|---|
| 1 | 17 | 6.6 | 6.6 | 4950 | 0.11 |
| 2 | 17 | 6.6 | 6.6 | 4950 | 0.22 |
| 3 | 17 | 6.6 | 13 | 4950 | 0.11 |
| 4 | 17 | 6.6 | 13 | 4950 | 0.22 |
| 5 | 17 | 6.6 | 20 | 4950 | 0.11 |
| 6 | 17 | 6.6 | 20 | 4950 | 0.22 |
| 7 | 17 | 6.6 | 20 | 4950 | 0.45 |
| 8 | 17 | 6.6 | 20 | 4950 | 0.9 |
| 9 | 17 | 6.6 | 20 | 3300 | 0.9 |
| LHI | 17 | 30 | 30 | 1650 | 1.6 |
| Break | 17 | 40 | 80 | 1650 | 5.3 |

A tensile strength and an approach margin are evaluated with regard to the respective test pieces. A result of evaluation is shown in Table 2. Further, "HAZ portion" is a portion subjected to heat affect centering on the bonding face. Further, an approach margin of Table 2 is approach margin between times T1 through T3 of Fig. 3 and is not an approach margin only an interval of time T4 of Fig. 3 as in a approach margin of Table 3 explained later.

**(Table 2)**

| No. | Tension strength | | | Approach Margin (mm) |
|---|---|---|---|---|
| | Rupture stress (MPa) | Rupture portion | Result of Evaluation | |
| 1 | 361 | HAZ portion | NG | 0.03 |
| 2 | 444 | HAZ portion | NG | 0.09 |
| 3 | 456 | HAZ portion | NG | 0.14 |
| 4 | 463 | Base member | OK | 0.14 |
| 5 | 461 | Base member | OK | 0.21 |
| 6 | 465 | Base member | OK | 0.23 |
| 7 | 465 | Base member | OK | 0.27 |
| 8 | 467 | Base member | OK | 0.47 |
| 9 | 467 | Base member | OK | 0.48 |
| LHI | 465 | Base member | OK | 1.6 |
| Break | 486 | Base member | OK | 7.3 |

It is predicted from Table 2 that the upset pressure P2 is deficient in Nos. 1 and 2. Further, it is predicted that the friction step time T1 is deficient and heating is insufficient in No. 3. It is known that the friction welding is finished and the approach margin is small (that is, occurrence of burr is inconsiderable) while having a strength equivalent to those of LHI method, brake type friction method in other test pieces. Further, in all of Nos. 1 through 9, the approach margin at the friction step is substantially null or small. On the other hand, the approach margins at the friction step by the LHI method and brake type friction method are respectively 0.8 mm, 4.0 mm.

Further, it is known from Table 1 that a peripheral speed of No. 9 is 2.9 m/s, peripheral speeds of Nos. 1 through 8 are 4.4 m/s, and the bonding is acceptable in a range of a peripheral speed of 2 m/s through 5 m/s.

It can be confirmed from the above-described result that as a result of observing the works subjected to the friction welding by the method, the burr becomes smaller than that by the method of the background art. Further, as a result of carrying out a tensile test, it can be confirmed that the works are sufficiently bonded.

Further, test pieces shown in Table 3 are prepared, and friction welding is also carried out in a test condition shown in Table 3. The material of the works W1 and W2 (which are test pieces) are S15C or S55C. The shape of the portion of bonding the works W1 and W2 stays the same, and is a solid round bar or a hollow round bar, outer side diameters are 24 mm, wall thicknesses are 3.5 mm in Nos. 12, 14 of the hollow test piece. T0 of Table 3 is time from time of bringing the works W1 and W2 into contact with each other until starting to apply the thrust P0. T1 is time of starting to exert the press force P1 until starting to apply the upset pressure P2. C.S. in the table 3 stands for a circumference speed of the piece. R.E. in the table stands for a result of the evaluation.

**(Table 3)**

| No. | Material | Work's | P0 | P1 | P2 | A1 | C.S | T0 | T1 | U | R.E. |
|---|---|---|---|---|---|---|---|---|---|---|---|
| | | Diameter | (MPa) | (MPa) | (MPa) | (rpm) | (rpm) | (sec) | (sec) | (mm) | |
| 10 | S15C | Φ17solid | 6.6 | 6.6 | 13 | 4950 | 4.4 | 0 | 0.22 | 0.15 | OK |
| 11 | S15C | Φ24solid | 6.6 | 30 | 30 | 3300 | 4.1 | 0.5 | 1.5 | 0.35 | OK |
| 12 | S15C | Φ24*3.5 | 6.6 | 6.6 | 13 | 6600 | 8.3 | 0 | 0.22 | 0.77 | OK |
| 13 | S55C | Φ17solid | 6.6 | 6.6 | 30 | 4950 | 4.4 | 0 | 0.5 | 0.14 | OK |
| 14 | S55C | Φ24solid | 6.6 | 30 | 30 | 1650 | 2.1 | 0.5 | 1.5 | 0.16 | OK |
| 15 | S55C | Φ24*3.5 | 13 | 13 | 30 | 6600 | 8.3 | 0 | 0.45 | 0.65 | OK |
| 16 | S55C | Φ24solid | 6.6 | 30 | 30 | 3300 | 4.1 | 0.5 | 1.5 | 0.04 | NG |
| 17 | S55C | Φ24solid | 6.6 | 13 | 30 | 4950 | 6.2 | 0.5 | 5.25 | -0.04 | NG |

With regard to the respective test pieces, approach margins U, that is, the approach margins U at the time T4 before and after the fixedly bonding time are measured and summarized in Table 3. Next, after the friction welding, the respective test pieces are subjected to the tensile test, and acceptability of bonding is evaluated by rupture portion. As evaluation of the bonding, a case that the rupture portion is exposed at HAZ portion is made to be unacceptable and a case that the rupture portion is disposed at a portion of a base member other than HAZ portion is determined to be acceptable. It is known from the approach margin U and the result of evaluation of the bonding that the bonding is acceptable when the approach margin U is equal to or larger than 0.1 mm, preferably, equal to or larger than 1.3 mm.

Further, the present friction welding method is a method of reducing the approach margin to thereby reduce the burr. Therefore, it is preferable to determine an upper limit of the approach margin U, for example, determine the upper limit value as 1 mm, and determine that the production is failed when larger than the upper limit value. Further, it can be confirmed that according to the respective test pieces of Table 3, the upper limit value of all of the approach margins U is equal to or smaller than 1 mm, and also the burr is sufficiently small. Further, it is also known that it is preferable that in the test pieces shown in Tables 1 and 3, from a view point of reducing occurrence of the burr, a preferable speed in the friction welding is equal to or larger than 2 m/s in the case of the solid round bar and equal to or larger than 8 m/s in the case of hollow round bar.

While the invention has been described with reference to specific configurations, it will be apparent to those skilled in the art that many alternatives, modifications and variations may be made without departing from the scope of the present invention. Accordingly, the present invention is intended to embrace all such alternatives, modifications and variations that may fall within the spirit and scope of the appended claims. For example, the present invention should not be limited to the representative configurations, but may be modified as described below.

In the above configuration, the second work W2 is set to be into a rotatable free state by controlling the motor (servo motor) 5a simultaneously with restricting the rotation of the first work W1. However, the second work W2 can be rotated in a direction the same as that of the first work W1 by controlling the motor 5a simultaneously with restricting the rotation, thereby, forcibly rotating the second work W2. As a result, the first work W1 starts decelerating, the second work W2 starts rotating positively with the first work W1, thereafter, the relative rotation between the works W1 and W2 becomes null. Therefore, the relative rotation between the works W1 and W2 becomes null in short time. In this way, a torsion generated between the pair of works W1 and W2 becomes small, and the burr produced by the torsion becomes small.

In the above configuration, the friction welding apparatus has the spindle motor 4a for rotating the first work W1 as the rotating apparatus of relatively rotating the works W1 and W2 at the friction step. However, the friction welding apparatus may have a motor (or the like) for rotating the second work W2 as the rotating apparatus, or a motor (or the like) for rotating the first and the second works W1 and W2 against each other at the friction step.

In the above configuration, the upset pressure P2 is applied simultaneously with restricting the rotation. However, the upset pressure P2 may be applied after restricting the rotation, after an elapse of predetermined time, and before the relative rotation of the first and the second work W1, W2 becomes null.

In the above configuration, the time point of changing the second work W2 from acceleration to deceleration is specified as the fixedly bonding time. However, the fixedly bonding time may be specified by time of an elapse of predetermined time from time of restricting the rotation on the side of the first work W1 and bringing the second work W2 into the free state by the controlling means. Further, the predetermined time can previously be stored in the storage member.

In the above configuration, the quality control step may be added so that a failure in production is constituted when the approach margin U is smaller than a lower limit value (for example, 0.03 mm). Further, it is preferable that as the lower limit value, when the approach margin U is smaller than a certain value, the certain value by which the works W1 and W2 are not sufficiently bonded is calculated from an experiment or the like, and the certain value is set to as the lower limit value of the approach margin U.

The quality control step may be added so that a failure in production is constituted when the approach margin U within predetermined time after starting the rotational restriction of the work is larger than null, or larger than a predetermined value. The predetermined time after stating the restriction is set to constitute a time range from a time point of starting the restriction until time point at which occurrence of a true approach margin is anticipated. Because, when the approach margin is generated before generating the true approach margin, it is anticipated that the approach margin becomes excessively larger and much burr is brought about.

The quality control step may be added so that a failure in production is constituted when time from starting the rotational restriction of the work to fixedly bonding the works exceeds predetermined time. According thereto, the failure is determined because it is anticipated that sufficient friction is working as anticipated is not carried out when fixedly bonding is not brought about within predicted time.

The quality control step may be added so that a failure in production is constituted when the approach margin within predetermined time before stopping the spindle (before stop rotating the first work W1) is larger than an upper limit value. Because the approach margin is larger than the upper limit value, the burr is larger.

In the above configuration, fixedly bonding time of fixedly bonding the works W1 and W2 is specified, and it is determined whether the approach margin (within predetermined time before and after the fixedly bonding time) is larger than a predetermined value. However, predetermined time before and after the time of anticipating the fixedly bonding or attaching may be set without calculating the fixedly bonding time and the failure in production may be determined when the approach margin at the predetermined time is larger than the upper limit value.

According to the above configuration, the second work W2 is brought into the free state in the upset step. However, the second work W2 may be kept in an unrotatable state at upset step (simple ML method). In this case, the controlling means 7 calculates and specifies the fixedly bonding time based on a time point at which restriction of rotation of the first work W1 is started and a time point at which rotation of the work W1 is stopped. For example, a middle time point of the rotation restriction time and the rotation stop time is calculated and specified as the fixedly bonding time. Therefore, the fixedly bonding time can be specified by the state of the work W1 on the rotating side, thereby, the fixedly bonding time can simply and firmly be provided. Further, it can be predicted from a result of an experiment that the fixedly bonding time can constitute the specified time.

The method of specifying the fixedly bonding time in the simple ML method may be constituted by a method of constituting time of an elapse of predetermined time after starting the rotational restricting of the work in place of the method described above. Further, the predetermined time can previously stored to the storage member.

The method of specifying the fixedly bonding time in the simple ML method may be constituted by a method of specifying the fixedly bonding time by a torque between the works W1 and W2 in place of the method described above. For example, there may be constituted a method of measuring a torque of rotating the first work W1 by a torque sensor, storing the torque value continuously in the storage member and specifying time of peak of the torque as the fixedly bonding time by the controlling means.

The method of specifying the fixedly bonding time of the simple ML method may be constituted by a method of specifying the fixedly bonding time by measuring a transmission torque of the work on the fixed side (W2 in the above configuration) in place of the method described above. For example, there may be constituted a method of measuring a torque transmitted to the second work W2 by the torque sensor, storing the torque value continuously by the storage member and specifying time of a peak of the torque as the fixedly bonding time by the controlling means.
One aspect of the present invention can include a friction welding method having a friction step for generating a friction heat by pressing the pair of works (W1,W2) while relatively rotating the pair of works (W1,W2), and an upset step started before generating an approach margin at the pair of works (W1,W2) at the friction step, restricting rotation of the pair of works (W1,W2) relative to each other and applying an upset pressure between the pair of works (W1,W2).

## Claims

1. A friction welding method pressing a pair of works (W1,W2) while rotating the pair of works (W1,W2) relative to each other comprising:
a friction step for generating a friction heat by pressing the pair of works (W1,W2) while relatively rotating the pair of works (W1,W2); and
an upset step started before generating an approach margin at the pair of works (W1,W2) at the friction step, restricting rotation of the pair of works (W1,W2) relative to each other and applying an upset pressure between the pair of works (W1,W2).

2. The friction welding method as in claim 1, wherein the friction step is carried out by a relative rotation speed so as to not produce a fouling at least at a work peripheral portion.

3. The friction welding method as in one of claims 1 and 2, wherein the work (W1) on one side is rotated, and the work (W2) on other side is held in an unrotatable state, and at the upset step, a brake is applied to the rotated work (W1) on the one side, and the work (W2) on the other side is brought into a rotatable free state.

4. The friction welding method as in one of claims 1 and 2, wherein the work (W1) on one side is rotated, and the work (W2) on other side is held in an unrotatable state, and at the upset step, a brake is applied to the rotated work (W1) on the one side, the work (W2) on the other side is rotated in a direction the same as the work (W2) on one side.

5. The friction welding method as in one of claims 1 to 4, wherein a relative rotational speed of the pair of works (W1,W2) at the friction step is set at 3300 to 10000 rpm, and a pressure pressing the pair of works (W1,W2) at the friction step is set at 5 to 10 MPa.

6. The friction welding method as in one of claims 1 to 4, wherein a relative circumference speed of the pair of works (W1,W2) at the friction step is set at 2 to 9 m/sec, and a pressure pressing the pair of works (W 1,W2) at the friction step is set at 5 to 40 MPa.

7. The friction welding method as in one of claims 5 and 6, wherein at the upset step, an upset pressure is set at 10 to 30 MPa.

8. A friction welding apparatus (1) comprising:
a rotating apparatus (4a) capable of relatively rotating a first work (W1) and a second work (W2);
a thrust mechanism (6a) capable of feeding the first and the second works (W1,W2) in a direction towards each other; and
a controlling device (7); wherein:
the controlling device (7) is capable of restricting a relative rotation between the first and the second works (W1,W2) after a setting time after the works (W1,W2) contact with each other, further wherein the controlling device (7) is capable of applying an upset pressure between the first and the second works (W1,W2) by the thrust mechanism (6a), and the setting time is set to a time before generating an approach margin between the first and the second works (W1,W2).

9. The friction welding apparatus (1) as in claim 8, further including a first holding base (2) capable of holding rotatably the first work (W1), a second holding base (3) capable of holding rotatably the second work (W2), and a servo motor (5a) capable of releasably holding the second work (W2) relative to the second holding base (3), wherein the rotating apparatus (4a) is capable of rotating the first work (W1) relative to the first holding base (2), the rotation of the first work (W1) can be restricted by the controlling device (7), and in restricting the rotation of the first work (W1), the second work (W2) is in a rotatable free state by the servo motor (5a).

10. The friction welding apparatus (1) as in claim 8, further including a first holding base (2) capable holding rotatably the first work (W1), a second holding base (3) capable of holding rotatably the second work (W2), and a servo motor (5a) capable of rotating the second work (W2) relative to the second holding base (3), wherein the rotating apparatus (4a) is capable of rotating the first work (W1) relative to the first holding base (2), the rotation of the first work (W1) can be restricted by the controlling device (7), and in restricting rotation of the first work (W1), the second work (W2) is forcibly rotated by applying a force in a same direction as the first work (W1) from a state of holding a position thereof by controlling the servo motor (5a).

11. The friction welding method as in one of claims 1 to 7, further including a quality control step of determining via the controlling device (7) whether the approach margin of the pair of works (W1,W2) before and after a fixedly bonding time is larger than a value set by the controlling device (7).

12. The friction welding method as in claim 11, wherein the work (W1) on one side is rotated, and the work (W2) on other side is held in an unrotatable state, and at the upset step, a brake is applied to the rotated work (W1) on the one side, and the work (W2) on the other side is brought into a rotatable free state, and the controlling device (7) sets a time point at which the work on the other side (W2) is decelerated from being accelerated as being a fixedly bonding time that is based on a detecting signal from a sensor measuring a rotational speed of the work (W2) brought into the free state.

13. The friction welding method as in claim 11, wherein the work (W1) on one side is rotated, and the work (W2) on other side is held in an unrotatable state, and at the upset step, a brake is applied to the rotated work (W1) on the one side, and the work (W2) on the other side is kept in the unrotatable state, and the controlling device (7) calculates and sets a fixedly bonding time based on a time point of restricting rotation and a time point of stopping rotation of the rotated work (W1).

14. The friction welding apparatus (1) as in one of claims 8 to 14, wherein the controlling device (7) sets a fixedly bonding time to fixedly bond the first and the second works (W1,W2) and determines if the approach margin between the works (W1,W2) at a predetermined time before and after the fixedly bonding is larger than a predetermined value.
